# EUROPEAN PATENT APPLICATION

(11) **EP 2 447 842 A1**
(43) Date of publication of application: **02.05.2012**
(21) Application number: 10306185.9
(22) Date of filing: 28.10.2010
(51) Int. Cl.: G06F 11/10

(54) **Method and system for error correction in a memory array**

(71) Applicant: Thomson Licensing, 92130 Issy-les-Moulineaux (FR)
(72) Inventor: Blawat, Meinolf, 30659, Hannover (DE); Georgi, Marco, 30855, Langenhagen (DE); Theis, Oliver, 30655, Hannover (DE)
(74) Representative: Thies, Stephan

(57) **Abstract**

In accordance with an exemplary embodiment of the present invention, a system (100) is provided to store data to a memory array (108) with adaptive error correction. The system (100) includes a memory array (108) comprising a plurality of memory cells and a conductive path for accessing the memory cells. The system also includes a storage controller (106) configured to receive payload data from a host, identify a target memory location for the payload data, encode the payload data to generate a codeword, and store the codeword to the memory array (108). The error correction code rate used to encode the payload data depends, at least in part, on an expected level of electromagnetic interference for the target memory location.

## Description

The present invention relates to the field of electronic storage devices. In particular, exemplary embodiments of the present invention relate to a method and system for implementing error correction in a memory array.

Multi-Level Cell, or MLC, flash storage devices are becoming more prevalent in a wide variety of applications, including consumer electronics such as cameras, camcorders as well as MP3 players, mobile phones and the like. In contrast to Single-Level Cell, or SLC, flash storage devices these multi-level devices consist of non-volatile flash storage cells that are able to store more than one bit of information, thus increasing the storage density of the device.

One drawback of MLCs is that their write cycle lifetime and retention time are limited compared to SLCs. In SLCs only the presence or absence of charges on the floating gates represents the stored information bit, whereas in MLCs it is the amount of charge that represents the actually stored level, or in other words the stored multibit digit. In order to discriminate the stored level, the exact amount of charge on the floating gates have to be detected. Therefore, MLCs are more susceptible than SLCs to errors caused by defects of the isolating silicon oxide layer. Furthermore, as technology form factors are scaled down, the occurrence of spontaneous loss of charge will tend to occur more often.

In the following, the actual or original data that is to be stored is referred to as the payload data. In order to overcome the occurrence of errors, strong error correction codes are applied to the payload data. Thus, in addition to the payload data, additional data is stored to enable the detection and correction of imperfections of the payload data. For example, in an error correction scheme known as 7-4 Hamming Code, only four of seven total bits are payload data and the other three bits are redundancy data added by the error correction encoding process for detecting and correcting errors. Generally, the ratio of the number of payload bits to the total number of bits of the encoded data is referred to as the rate of the error correction code, the code rate, or the ECC rate. If errors occur more frequently, more redundancy data have to be spent per payload data, leading to a decreased code rate as being the price to pay for a better error protection.

In MLC flash memory devices the required strength of error correction generally depends mainly on the number of bits per cell and the technology node, in other words, on the size of the cells also known as the technology generation. If the number of bits per cell is high and the technology node is small, a relatively strong error correction will generally be needed, requiring more bits being devoted to redundancy. Therefore, some of the increase in storage density gained with the transition from SLC to MLC is lost due to the lesser allowable percentage of payload data per stored data.

However, not all cells of a storage device will be susceptible to the same levels of error. For example, different cells may have different operational characteristics due to small variations between memory cell characteristics occurring during manufacture. Furthermore, whenever a storage cell is programmed or deleted, defects can be introduced to the cell. The more write operations a cell sustains, the greater probability that the cell will tend to generate an error. Thus, differences in the number of write operations that have been applied to different cells will also provide different error susceptibility.

For example, U.S. Patent Application Publication No. 2008/0222490, by Leung, et al., purports to disclose a method and system for dynamic adjustment of an ECC rate applied to a memory array such as flash memory cells. The bit error rate of the memory array is monitored. The code rate may be changed from a first code rate to a second code rate in response to a change in a monitored bit error rate.

International Patent Application Publication No. WO 2009/053961, by Weingarten, et al., purports to disclose a system and method for encoding information to be stored to a flash memory. An effective error rate is determined based on the number of expected reading errors for a flash memory location. The encoding rate for storing the information to the memory array is determined based on the effective error rate.

An improved method and system for encoding data to be stored to a memory array is desirable.

A system to process data according to the invention is set forth in claim 1. The system includes a memory array comprising a plurality of memory cells and a conductive path for accessing the memory cells. The system also includes a storage controller configured to receive payload data from a host, identify a target memory location, encode the payload data to generate a codeword, and store the codeword to the memory array at the target memory location. According to the invention, the storage controller is configured to chose an error correction code to encode the payload data in such a way that its code rate and correction capability take into account, at least in part, an expected level of electromagnetic interference for the target memory location.

In an embodiment of the system, the expected level of electromagnetic interference is based, at least in part, on a proximity of the target memory location to the conductive path. As a very basic embodiment of this, the memory array can include a first error correction zone comprising memory cells closer to a conductive path and a second error correction zone comprising memory cells further away from the conductive path. According to the invention, error correction codes having different error correction capabilities and different code rates are used in the error correction zones: For data to be stored in the first error correction zone, where a stronger level of electromagnetic interference is expected, a first error correction code having a first code rate and a first correction capability is used, whereas for data to be stored in the second error correction zone, where a weaker level of electromagnetic interference is expected, a second error correction code having a second code rate larger than the first code rate and a second error correction capability smaller than the first error correction capability is used.

It is apparent to the skilled person that embodiments of the invention are not restricted to discriminating just between two error correction zones. The memory array can also include a third error correction zone associated with a third level of expected electromagnetic interference, in which zone a third error correction code having a code rate and error correction capability adapted to the level of expected electromagnetic interference is used.

When several of the conductive paths exist in the memory array in a grid-like arrangement, they may divide the memory array into a plurality of rectangular divisions. According to the invention then, each division is subdivided such as to comprise a first error correction zone toward the periphery of the division and a second error correction zone toward the center of the division. As explained above, a first error correction code of high correction capability at a first code rate is used in the first error correction zones of all divisions, whereas a second error correction code providing lower correction capability at a second code rate higher than the first code rate is used in the second error correction zones of all divisions.

In an embodiment, the system also includes a lookup table that maps the target memory location for the payload data to a specified error correction code to be used for the target memory location, wherein the controller is configured to access the lookup table to identify the error correction code applicable to the target memory location.

In an embodiment, the memory cells include multiple-level flash memory cells.

Another embodiment of the present invention provides a method of storing data to a memory array. The method includes receiving a payload word from a host, and identifying a target memory location within the memory array where codewords to be derived from the payload word are to be stored. The method also includes identifying an error correction code based, at least in part, on the level of electromagnetic interference expected for the target memory location; generating a codeword by encoding the payload word using the identified error correction code; and storing the codeword to the target memory location.

In an embodiment of the method, the error correction code rate is lower for target memory locations that are closer to a conductive path. In an embodiment, the memory array includes a first error correction zone comprising memory cells closer to a conductive path, and a second error correction zone comprising memory cells further away from the conductive path. In the first error correction zone, a first error correction code having a high correction capability at a first code rate is used; and in the second error correction zone, a second error correction code having a lower correction capability at a second code rate higher than the first code rate is used.

In an embodiment, identifying the error correction code comprises providing the target memory location to a lookup table and receiving a corresponding error correction code.

Exemplary embodiments of the present invention are described with reference to the accompanying drawings. The described embodiments merely exemplify the invention. Plural possible modifications are apparent to the skilled person. The gist and scope of the present invention is defined in the appended claims of the present application.
Fig. 1 is a block diagram of a system for storing data to a memory device, in accordance with an exemplary embodiment of the present invention.
Fig. 2 is a top view of a memory array with two error correction zones, in accordance with exemplary embodiments of the present invention.
Fig. 3 is a top view of a memory array with three error correction zones, in accordance with exemplary embodiments of the present invention.
Fig. 4 is a top view of a memory array showing a memory array architecture, in accordance with exemplary embodiments of the present invention.
Fig. 5 is a process flow diagram of a method of storing data to a memory device, in accordance with an exemplary embodiment of the present invention.

In accordance with an exemplary embodiment of the present invention, a method and a system is provided for storing data to a memory array. In accordance with embodiments, data may be received from a host and encoded by adding redundancy data according to an error correction technique, referred to herein as the error correction code schema, or ECC schema. The encoded data, referred to herein as the codeword, may be stored to target cells of the memory array. The payload data received from the host for storage and contained within the codeword is referred herein as a payload word. The number of redundancy bits added to the payload data to generate the codeword determines the error correction code rate, referred to herein as the ECC rate or code rate. The code rate being defined as payload bits per codeword bits, an increased number of redundancy bits added to the data corresponds to an increasingly lower code rate. With this definition, the code rate is a real number larger than 0 and less or equal to 1, where large code rates typically correspond to small error correction capability and vice versa. According to the invention, for data to be stored at a specific target cell of the memory array, the code rate is selected acording to the proximity of the target cell to a source of electromagnetic interference, such as a communications bus that conducts current to and from the memory cells; and for the conversion of payload data into codewords, an ECC schema having the code rate is employed.

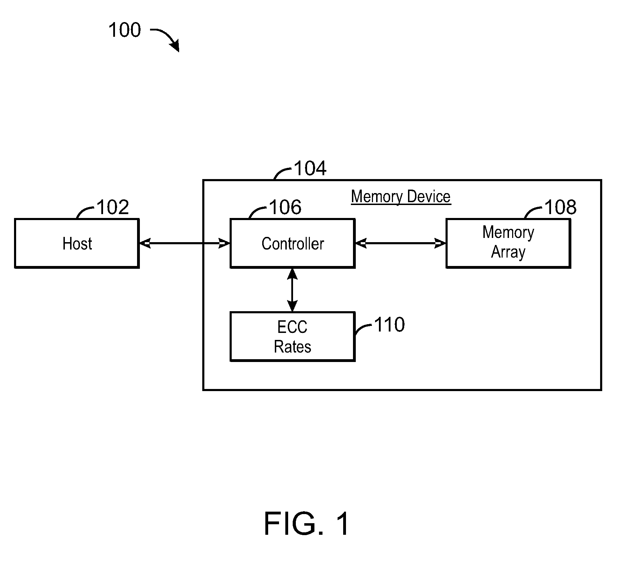

Fig. 1 is a block diagram of a system 100 for storing data to a memory array in accordance with an exemplary embodiment of the present invention. The system 100 may include a host 102 operatively coupled to a memory device 104. The memory device 104 may be any type of addressable electronic storage device, including NAND and NOR flash memory devices. For example, the memory device may be a universal serial bus, or USB, flash drive and may be coupled to the host through a USB port. In another exemplary embodiment, the memory device may be a solid-state flash drive used in a general purpose computer or other electronic device, such as a mobile phone, and may be coupled to the host 102 through an internal communications bus. In another exemplary embodiment, the memory device may be a memory card, such as a secure digital, or SD, card used in a digital camera, camcorder, mobile phone, mp3 player, and the like.

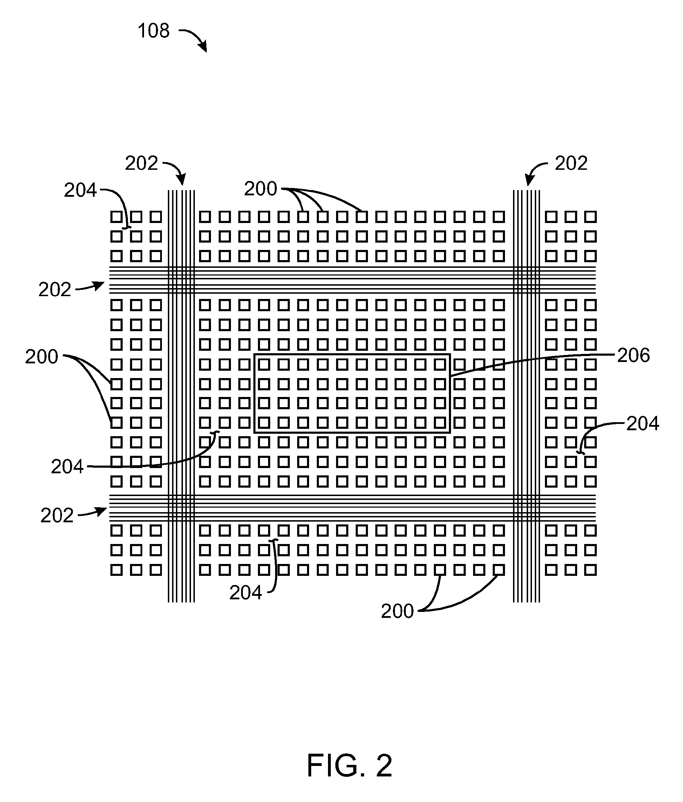

The memory device 104 may include a controller 106 and a memory array 108. The memory array 108 can include an array of memory cells, which may be non-volatile flash memory cells, or other types of addressable memory. The controller 106 receives payload data from the host 102, determines a target memory location for the data, and encodes the data for storage to the memory array 108. For encoding the data, the controller 106 may apply any suitable ECC schema, including linear and non-linear block error correction codes such as Hamming codes, Reed-Solomon codes, Turbo codes, or LDPC codes, among others. Furthermore, as will be explained further below in reference to Fig. 2, the present invention takes into account an observation that different memory cells of the memory array 108 may be susceptible to different levels of electromagnetic interference and hence may suffer different error rates. Thus, according to the present invention, different geometric areas of the memory array 108 may be associated with distinct ECC codes having different correction capability at different code rates. The controller 106 may select the ECC based on the target memory location, with other words on the address of the target memory cells. In an exemplary embodiment, a lookup table 110 may be used to associate each particular address of the memory array 108 with a corresponding ECC. The lookup table 110 may be populated based on the architecture of the memory array 108, taking into account the proximity of each of the memory cells to sources of electromagnetic interference, such as communications bus lines. Exemplary embodiments of the present invention may be better understood with reference to Fig. 2.

Fig. 2 is a top view of a memory array 108 with two error correction zones, in accordance with exemplary embodiments of the present invention. The memory array 108 includes a plurality of memory cells 200, aligned in a grid formation. The memory cells 200 may be any suitable type of data storage cell, including Floating Gate Metal-Oxide Semiconductor Field Effect Transistors, abbreviated as FG-MOSFET, among others. Furthermore, the memory cells 200 may be single-level cells that represent a single bit of information, or multiple-level cells that can represent two or more bits of information. In exemplary embodiments, the memory array 108 may be an array of NAND flash memory cells or NOR flash memory cells. However, it will be appreciated that embodiments of the present invention may be applicable to other types of memory that are suitable for employing error correction encoding.

The memory array 108 may also include conductive paths 202, each of which can include one or more electrical conductors. For example, the conductive path 202 may include communications bus lines used for addressing the memory cells 200 and for transmitting data to and from the memory cells 200. The conductive paths 202 may also include other types of electrical interconnects. In exemplary embodiments, the conductive paths 202 may be arranged in a grid-like pattern such that the memory cells 200 are divided into groups referred to herein as divisions 204. Although the particular arrangement of conductive paths 202 shown in Fig. 2 results in a regular arrangement of equal size memory cell divisions, it will be appreciated that the present invention also includes embodiments wherein the conductive paths are irregularly spaced. Further, the memory cell divisions 204 may or may not correspond to a logical grouping of memory cells 200. For example, memory blocks, pages, and the like, may or may not be aligned with the memory divisions 204.

The memory cells 200 can be written or deleted by applying a suitable programming voltage to the memory cell's 200 floating gate through one of the conductive paths 202. The applied programming voltage causes charges to travel to or from the floating gate, resulting in a current impulse that flows through the conductors of the conductive path 202. The magnetic and electric fields caused by these programming currents may tend to cause one or more of the memory cells 200 to improperly discharge, due in part perhaps to some already existing minor defect in the isolating oxide layer. In this way, the data stored in the corresponding memory cell 200 can be lost, resulting in error when an attempt is made to read the data. Furthermore, those memory cells 200 that are closer to the conductive paths 202 will tend to experience greater electrical or magnetic fields from the conductive paths 202, and thus may tend to experience greater rates of error. By contrast, those memory cells 200 that are further away from the conductive paths 202 may tend to experience relatively lower rates of error.

In accordance with exemplary embodiments of the present invention, ECC coding may be adapted to the degree of influence of the magnetic and electrical fields caused by the programming currents and voltages carried by the conductors of the conductive path 202. Specifically, the ECC schema applied to generate a particular codeword may be determined based on the proximity of the associated target memory location to one of the conductive paths. In an exemplary embodiment, each memory division 204 may be divided into two or more error correction zones. For example, as shown in Fig. 2, a first error correction zone comprises all those memory cells of the memory division 204 that are close to at least one of the conductive paths, i. e. all memory cells within the memory division 204 but outside of a zone boundary 206, whereas a second error correction zone comprises those memory cells 200 that lie within the zone boundary 206 and are farther away from the conductive paths.

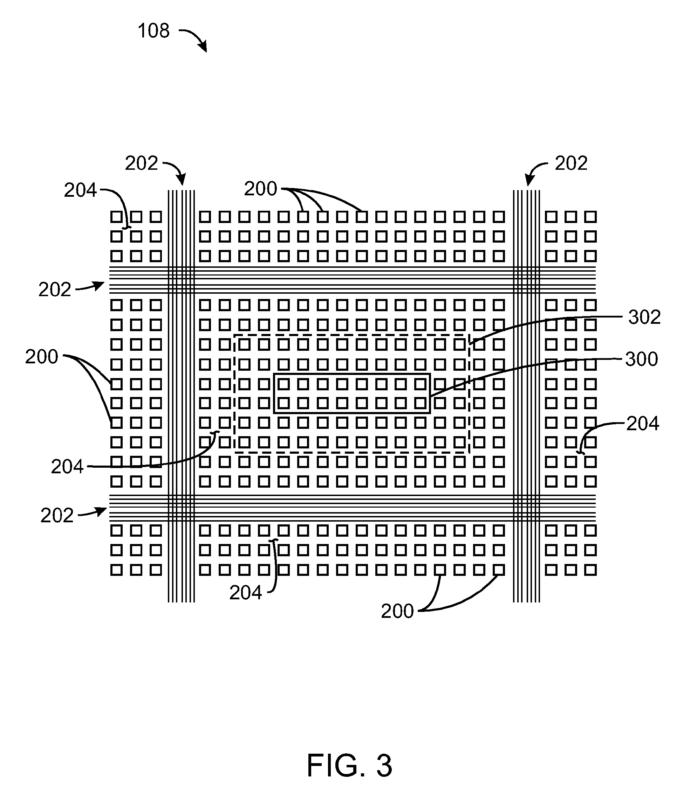

In an exemplary embodiment, each of the error correction zones may be associated with a different ECC schema. For example, a three error correcting code may be applied to the first error correction zone, while a two error correcting code may be applied to the second error correction zone, resulting in a higher code rate for the second error correction zone. In an exemplary embodiment, different error correction zones may even be associated with different kinds of ECC schemas. For example, a Hamming code ECC schema may be applied to the first error correction zone, while a Turbo code ECC schema may be applied to the second error correction zone. The skilled person will appreciate that embodiments of the present invention are not limited to examples provided above, as any suitable combination of ECC rates and/or even ECC schemas may be employed in accordance with embodiments of the present invention. Further, as described in reference to Fig. 3 below, embodiments of the present invention are not limited to two error correction zones.

Fig. 3 is a top view of a memory array illustrating three error correction zones, in accordance with exemplary embodiments of the present invention. As shown in Fig. 3, each memory division 204 may include three error correction zones. A first error correction zone comprises all those of the memory cells of the division 204, that are most exhibited to electromagnetic interference, i.e. the memory cells outside of the dashed zone boundary 302. A second error correction zone includes lesser exhibited ones of the memory cells, i.e. those contained between the dashed zone boundary 302 and the solid line zone boundary 300. A third error correction zone includes the least affected ones of the memory cells, located at maximum distance of any conducting path, i.e. those inside the solid line zone boundary 300.

As noted above, each error correction zone may be associated with a different ECC schema or ECC rate. In general, this involves grouping payload bits into payload words and applying one of several different ECC codes to the payload words to obtain codewords to be stored in the memory cells.

For this general approach, two special embodiments have particular properties and advantages that may be favourable in a specific context.

In a constant payload wordlength approach, payload words are invariably formed having constant size independent of the zone where their codewords shall be stored in. Depending on the zone, then, payload words are coded into a varying number of code bits, allowing for varying degrees of error correction capability. As an illustrative example, payload words of 24 bits and Hamming coding by will be considered in the following:
In the first error correction zone requiring highest correction capability, the 24 bit payload words are subdivided into 3 payload subwords of 8 bits each. The payload subwords are individually coded by a (12,8) Hamming code into 12 bit code subwords, and concatenation of the 3 code subwords yields a 36 bit codeword. The overall error correction capability of this code is illustrated by the fact that in each third of the codeword, one error is correctable.
In the second error correction zone requiring medium correction capability, the 24 bit payload words are subdivided into 2 payload subwords of 12 bits each. The payload subwords are individually coded by a (17,12) Hamming code into 17 bit long code subwords, and concatenation of the 2 code subwords yields a 34 bit codeword. The overall error correction capability of this code is illustrated by the fact that in each half of the codeword, one error is correctable.
In the third error correction zone requiring lowest correction capability, the payload words are not subdivided any further, and are coded by a (29,24) Hamming code into 29 bit codewords. The error correction capability of this code is illustrated by the fact that in each codeword, one single error is correctable.

In a constant codeword length approach, depending on the error correction zone to be used, different numbers of payload bits are grouped together and are coded into codewords of constant length. As an illustrative example, a codeword length of 24 bits will be considered.

In the first error correction zone requiring highest correction capability, the input consists of a 12 bit payload word, subdivided into 3 payload subwords of 4 bits each. The payload subwords are individually coded with an (8,4) Hamming code into 8 bit long code subwords, and concatenation of the 3 code subwords yields a 24 bit codeword. The overall error correction capability of this code is illustrated by the fact that in each third of the codeword, one error is correctable.

In the second error correction zone requiring medium correction capability, the input consists of a 16 bit payload word, subdivided into 2 payload subwords of 8 bits each. The payload subwords are individually coded with a (12,8) Hamming code into 12 bit long code subwords, and concatenation of the code subwords yields again a 24 bit codeword. The overall error correction capability of this code is illustrated by the fact that in each half of the codeword, one error is correctable.

In the third error correction zone requiring lowest correction capability, a 19 bit long payload word is directly coded with a (24,19) Hamming code into a 24 bit codeword in which a single error is correctable.

The above examples serve as illustrative examples only, the skilled person will also recognize a variety of other combinations of ECC rates and/or ECC schemas. Further, the memory divisions 204 may or may not be identical in terms of the size and shape of the error correction zones and the ECC schemas or ECC rates applied to each of the error correction zones. Other exemplary embodiments may include four, five, six or more error correction zones.

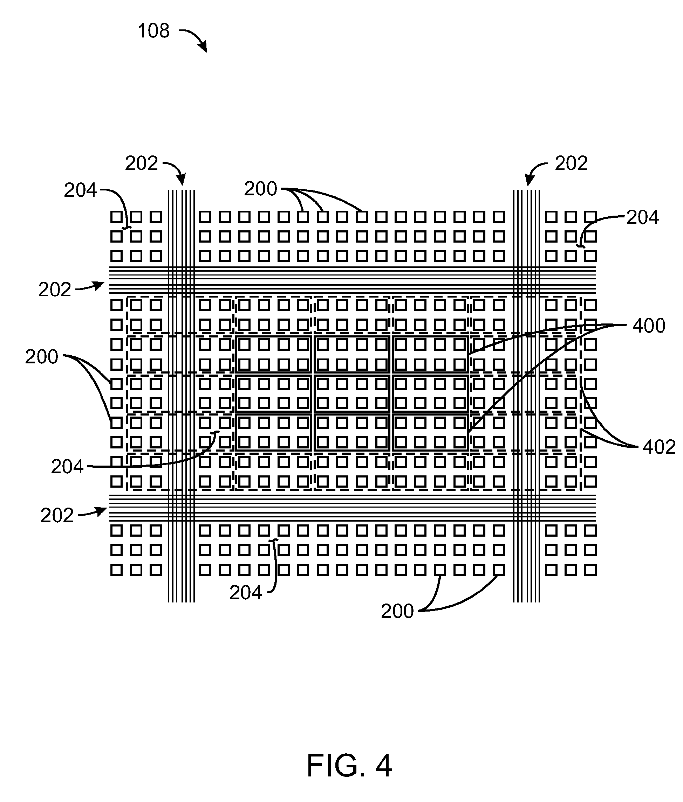

Fig. 4 is a top view of a memory array showing a memory array architecture with two error correction zones, in accordance with exemplary embodiments of the present invention. As shown in Fig. 4, the memory array 108 includes a plurality of memory cells 200 arranged in a grid formation with equal size memory divisions 204 separated by conductive paths 202. The memory cells 200 may be logically grouped into rectangular access blocks of eight memory cells each, as shown by the solid lines 400 and the dotted lines 402. Each access block can include two horizontal lines of four cells each.

In an exemplary embodiment, in each memory array division 204, 9 inner access blocks 400 form the second error correction zone where an ECC of lower correction capability and higher code rate is used. And outer access blocks 402 form the first error correction zone where an ECC of higher correction capability and lower code rate is used.

Assuming that the memory array consists of three bit cells, each access block can store a total of 24 bits. It is recognized by the skilled person that for allocating payload bits to the 24 bit access blocks in the two error correction zones, the constant codeword length approach as disclosed above, employing two different ECC codes, may be favourable.

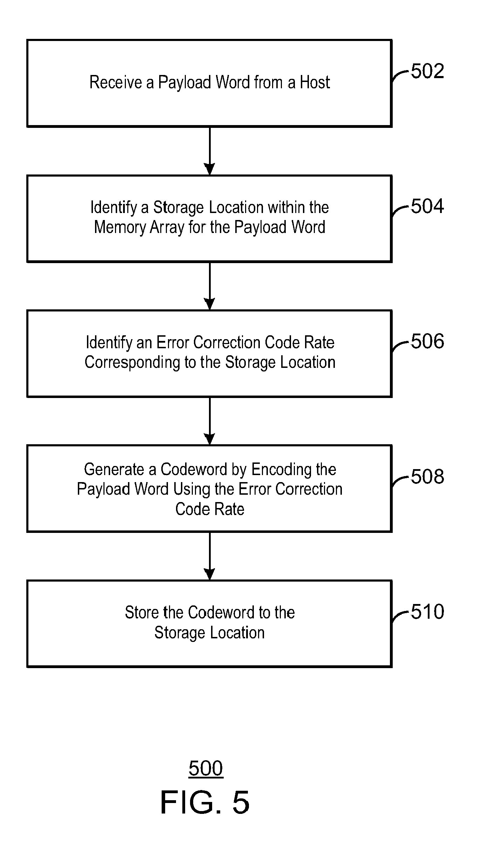

Fig. 5 is a process flow diagram of a **method** of storing data to a memory device, in accordance with an exemplary embodiment of the present invention. The method is referred to by the reference number 500. The method 500 may be embodied in a non-transient, computer-readable medium such as the memory device 104 of Fig. 1 and may be executed by the controller 106. The method may begin at block 502, wherein a payload word is received from the host. At block 504, a target memory location is identified for the payload word. The target memory location may be expressed as a memory address that corresponds with an explicit physical location within the memory array, to which the codeword representing the payload word shall be stored. At block 506, an error correction code represented by its code rate may be identified corresponding to the target memory location. In an exemplary embodiment, the error correction code may be identified by accessing a lookup table. For example, the lookup table may be indexed by target memory locations and map to the corresponding error correction code applicable for each target memory location. In exemplary embodiments, the code rate specified for each target memory location is based on the level of electromagnetic interference expected for the target memory location. For example, the code rate may be lower, and hence the correction capability higher, for target memory locations near conductive paths and vice versa for target memory locations away from conductive paths. In exemplary embodiments, the memory array is subdivided into different error correction zones, for example, two, three, four, five, six, or more error correction zones. Each error correction zone may employ different ECC schemas and/or different ECC rates.

At block 508, a codeword may be generated by encoding the payload word using the ECC code as identified by its code rate identified at block 506. At block 510, the codeword may be stored to the target memory location identified at block 504. The above method may be repeated for each payload word received from the host.

Upon receiving a read request from the host, a codeword may be read from the memory array and may be decoded using the same ECC schema and ECC rate used to encode the payload word. For example, the ECC schema and ECC rate used for decoding the codeword may also be determined by looking up the corresponding target memory location in the lookup table.

The techniques disclosed herein provide several advantages. By adapting the code rate or ECC schema to the degree of expected interference, the memory array 108 makes better use of the memory cell 200 density by avoiding unnecessary data redundancy. Thus, a better storage capacity may be achieved for a variety of memory devices, such as MLC flash memory devices, among others. Furthermore, as the technology advances to provide smaller memory cells 200 and higher density memory arrays 108, this adaptive ECC technique will become more important. The skilled person will appreciate that combining any of the above-recited features of the present invention together may be desirable.

## Claims

1. A system (100), comprising:
a memory array (108) comprising a plurality of memory cells (200) and a
conductive path (202) for accessing the memory cells (200); and
a storage controller (106) configured to receive payload data from a host
(102), to identify a target memory location for the payload data, to encode the payload data into a codeword, and to store the codeword to the memory array (108) at the target memory location;
**characterized in that** the storage controller (106) is configured to chose an error correction code used to encode the payload data in such a way that its code rate and correction capability take into account, at least in part, an expected level of electromagnetic interference for the target memory location.

2. A system according to claim 1, wherein the expected level of electromagnetic interference is based, at least in part, on a proximity of the target memory location to the conductive path (202).

3. A system according to claim 2, wherein the memory array (108) comprises a first error correction zone closer to the conductive path (202) in which zone a first error correction code having a first code rate and a first correction capability is used, and a second error correction zone further away from the conductive path (202) in which zone a second error correction code having a second code rate higher than the first code rate and having a second correction capability lower than the first correction capability is used.

4. A system according to claim 2 or claim 3, comprising several conductive paths (202) that divide the memory array (108) into a plurality of rectangular divisions (204), each division (204) comprising a first error correction zone toward the periphery of the division (204) and a second error correction zone toward the center of the division (204).

5. A system according to any of claims 1-4, comprising a lookup table (110) that maps the target memory location for the payload data to a specified error correction code for the target memory location, wherein the controller (106) is configured to access the lookup table (110) to identify the error correction code applicable to the target memory location.

6. A system according to any of claims 1-5, wherein the memory cells (200) comprise multiple-level flash memory cells.

7. A method (500) for storing data to a memory array (200), comprising:
receiving a payload word from a host (102);
identifying a target memory location within the memory array (108) for the
payload word;
identifying an error correction code corresponding to the target memory
location;
encoding the payload word into a codeword using the identified error
correction code; and
storing the codeword to the target memory location,
**characterized in that** the identification of an error correction code is based, at least in part, on the expected level of electromagnetic interference for the target memory location.

8. A method according to claim 7, wherein the expected level of electromagnetic interference is based, at least in part, on a proximity of the target memory location to a conductive path (202) of the memory array (200).

9. A method according to claim 7 or claim 8, wherein identifying the error correction code comprises providing the target memory location to a lookup table (110) and receiving from the lookup table (110) an error correction code identifier.

10. A method for reading data from a memory array (200), comprising:
reading a codeword from a target memory location;
identifying an error correction code corresponding to the target memory
location;
decoding the codeword into a payload word using the identified error
correction code; and
providing the payload word to a host (102); **characterized in that** the error correction code is based, at least in part, on the expected level of electromagnetic interference for the target memory location.
